# EUROPÄISCHE PATENTSCHRIFT

(11) **EP 4 282 127 B1**
(45) Veröffentlichungstag und Bekanntmachung des Hinweises auf die Patenterteilung: **29.04.2026**
(21) Anmeldenummer: 22713391.5
(22) Anmeldetag: 07.03.2022
(51) Int. Cl.: H04L 9/40, H04L 9/32, H04L 9/00, H04B 7/185, H04W 12/106, H04W 84/06

(54) **VERFAHREN ZUM ÜBERTRAGEN VON DATEN MITTELS ZUMINDEST ZWEI BEWEGTER KOMPONENTEN, COMPUTERPROGRAMMPRODUKT, SENDER UND EMPFÄNGER**
METHOD FOR TRANSMITTING DATA BY MEANS OF AT LEAST TWO MOVING COMPONENTS, COMPUTER PROGRAM PRODUCT, TRANSMITTER AND RECEIVER
PROCÉDÉ DE TRANSFERT DE DONNÉES AU MOYEN D'AU MOINS DEUX COMPOSANTS MOBILES, PRODUIT PROGRAMME INFORMATIQUE, ÉMETTEUR ET RÉCEPTEUR

(30) Priorität: 11.03.2021 EP 21162111
(43) Veröffentlichungstag der Anmeldung: 29.11.2023
(73) Patentinhaber: Siemens Aktiengesellschaft, 80333 München (DE)
(72) Erfinder: SAUER, Markus, 81739 München (DE); ZEIGER, Florian, 85635 Höhenkirchen-Siegertsbrunn (DE)
(74) Vertreter: Siemens Patent Attorneys
(86) Internationale Anmeldenummer: PCT/EP2022/055692
(87) Internationale Veröffentlichungsnummer: WO 2022/189329

(56) Entgegenhaltungen:
- CN-A- 111 432 010
- FU SHU ET AL: "Integrated Resource Management for Terrestrial-Satellite Systems", IEEE TRANSACTIONS ON VEHICULAR TECHNOLOGY, IEEE SERVICE CENTER, PISCATAWAY, NJ, US, vol. 69, no. 3, 6 January 2020 (2020-01-06), pages 3256 - 3266, XP011778080, ISSN: 0018-9545, [retrieved on 20200313], DOI: 10.1109/TVT.2020.2964659

## Beschreibung

Die Erfindung betrifft ein Verfahren zum Übertragen von Daten von einem Übertragungsursprung zu einem Übertragungsziel mittels zumindest zwei relativ zu Übertragungsursprung und/oder Übertragungsziel bewegter Komponenten. Die Erfindung betrifft ferner ein Computerprogrammprodukt sowie einen Sender und einen Empfänger.

In der globalen Industrie ist eine stets verfügbare Vernetzung und Kommunikationsanbindung entscheidend, um Kundenbedürfnisse zu befriedigen. In vielen Gegenden der Welt sind die Voraussetzungen für eine Vernetzung und Kommunikationsanbindung nicht gegeben. Daher muss in solchen Fällen auf Satellitenkommunikation zurückgegriffen werden.

Aus Shu Fu et al., »Integrated Resource Management for Terrestrial-Satellite Systems«, in: IEEE Transactions on Vehicular Technology, Vol. 69, No. 3, März 2020, S. 3256-3266 geht ein technisches System zur Verwaltung von Ressourcen in einem terrestrisch-satellitengestützten Kommunikationsnetzwerk hervor. Gegenstand der Offenbarung ist insbesondere ein Verfahren zur Übertragung von Daten zwischen Bodenstationen und Satelliten unter Berücksichtigung von Effizienzkriterien, Fairness und Datensicherheit. Die Datenübertragung erfolgt dabei in drei funktionalen Schritten: Datensammlung (Caching), Verarbeitung (Computing) und drahtlose Übertragung (Communication). Diese Schritte werden unter Einsatz von LEO-Satelliten (Low Earth Orbit) durchgeführt, welche sich in Umlaufbahnen um die Erde bewegen und regelmäßig Bodenstationen überfliegen. Zur Sicherstellung der Datensicherheit wird eine Blockchain-basierte Struktur verwendet, in der Datenblöcke kryptographisch miteinander verknüpft sind. Die Blockchain speichert dabei nicht die Daten selbst, sondern lediglich deren Speicherorte in Form von Hash-Werten, Nonces und Referenzen auf vorherige Blöcke. Dabei wird ein Optimierungsverfahren vorgeschlagen, das auf einem Nash-Verhandlungsmodell basiert, um eine faire und energieeffiziente Ressourcenzuteilung zwischen den Bodenstationen zu gewährleisten. Die Optimierung umfasst sowohl die Zuteilung von Energie auf die drei genannten Funktionen als auch die Bestimmung optimaler Übertragungszeiträume.

Die CN111432010A betrifft eine Blockchain-Plattform und ein Kommunikationsverfahren für mobile Endgeräte, welche eine dezentrale, mobile Blockchain-Architektur mit mehreren Kommunikationswegen kombiniert, darunter Ad-hoc-Netzwerke, LTE und Satellitenverbindungen. Die Blockchain-Plattform ist für Szenarien mit eingeschränkter Infrastruktur konzipiert, etwa bei Katastropheneinsätzen oder in abgelegenen Gebieten. Daten werden in einer mehrschichtigen Architektur verarbeitet, bestehend aus Speicher-, Daten-, Netzwerk-, Konsens- und Vertragsschicht. Die Datenverarbeitung erfolgt in einer Multi-Chain-Struktur, umfassend Speicher-, Berechtigungs- und Authentifizierungsketten, wobei auch Verschlüsselung über SD-Karten vorgesehen ist. Die Datenübertragung kann parallel über verschiedene Netzwerke erfolgen, wobei die Plattform auf mobile, leichtgewichtige Endgeräte ausgelegt ist.

Neue Satellitenkommunikationstechnologien werden aufgrund ihrer Architektur Daten auf andere Art und Weise übertragen, als es die heutigen, meist geostationären, System machen. Gerade bei den zukünftigen LEO-Satellitensystemen sind daher Weiterentwicklungen des Ansatzes "Speicherung und Weiterleitung" von Daten eine sehr wichtige Technologie. Eine Herausforderung ist es dabei, die Integrität von Daten, die mittels mehrerer Satelliten übertragen werden, sicherzustellen.

Es ist daher eine Aufgabe der Erfindung, ein verbessertes Verfahren zum Übertragen von Daten von einem Übertragungsursprung zu einem Übertragungsziel mittels zumindest zwei relativ zu Übertragungsursprung und/oder Übertragungsziel bewegter Komponenten anzugeben. Vorzugsweise soll eine Integrität der mittels des Verfahrens übertragenen Daten sichergestellt werden können. Ferner ist es Aufgabe der Erfindung, ein verbessertes Computerprogrammprodukt sowie einen verbesserten Sender und einen verbesserten Empfänger anzugeben, mittels welchen das Verfahren ausgeführt werden kann.

Diese Aufgaben der Erfindung werden mit einem Verfahren zum Übertragen von Daten von einem Übertragungsursprung zu einem Übertragungsziel mittels zumindest zwei relativ zu Übertragungsursprung und/oder Übertragungsziel bewegter Komponenten mit den in Anspruch 1 angegebenen Merkmalen sowie mit einem Computerprogrammprodukt mit den in Anspruch 10 angegebenen Merkmalen sowie mit einem Sender und einem Empfänger mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem Verfahren zum Übertragen von Daten von einem Übertragungsursprung zu einem Übertragungsziel mittels zumindest zwei relativ zu Übertragungsursprung und/oder Übertragungsziel bewegter Komponenten eines Netzwerks erfolgt die Übertragung mittels einer verteilten Datenbank mit mindestens zwei Teilen, wobei die mittels mindestens zwei der Komponenten übertragen werden und wobei die Teile der verteilten Datenbank miteinander kryptographisch verknüpft werden.

Das erfindungsgemäße Verfahren überwindet also die Schwierigkeiten bei bekannten Verfahren, die Integrität von mittels bewegter Komponenten eines Netzwerks übertragenen Daten sicherzustellen. Dazu wird erfindungsgemäß eine verteilte Datenbank mit kryptographisch verknüpften Teilen herangezogen, also eine Datenstruktur, die aus der Blockchain-Technologie bekannt ist. Erfindungsgemäß kann mittels einer solchen Datenstruktur, welche bereits zur Integrität von Transaktionen in Blockchains eingesetzt wird, auch die Integrität von Übertragungen in verzögerungstoleranten Netzwerken sichergestellt werden. Insbesondere in solchen Netzwerken mit bewegten Komponenten wie Satelliten lässt sich folglich die Integrität der übertragenen Daten sicherstellen. Mittels solcher kryptographischen Verknüpfungen, insbesondere mittels Prüfsummen, Hashwerten und/oder digitalen Signaturen, kann die Integrität daher nicht allein in einer zeitlichen Abfolge von Blöcken sichergestellt werden. Erfindungsgemäß kann mittels der kryptographischen Verknüpfung auch eine Integrität von Daten einer räumlich verteilten Datenbank mit mehreren Teilen sichergestellt werden.

Vorteilhaft kann die kryptographische Verknüpfung zur Rekonstruktion der Teile der verteilten Datenbank genutzt werden. Vorzugsweise wird bei dem erfindungsgemäßen Verfahren mittels der kryptographischen Verknüpfung der Bezug der Teile der verteilten Datenbank untereinander buchgehalten, sodass beim Empfang der Daten die kryptographische Verknüpfung zweckmäßig herangezogen werden kann, die Teile der verteilten Datenbank richtig zu den ursprünglichen Daten zu rekombinieren.

Bevorzugt umfasst bei dem erfindungsgemäßen Verfahren das Übertragen zumindest ein Senden und/oder Empfangen, d. h. das erfindungsgemäße Verfahren lässt sich sowohl zum Senden als auch zum Empfangen als auch für wechselseitiges oder gleichzeitiges Senden und Empfangen anwenden. In vorteilhaften Weiterbildungen der Erfindung bilden bei dem Verfahren die Daten, die übertragen werden, einen Datensatz oder ein Dokument.

Bei dem Verfahren gemäß der Erfindung umfassen die zumindest zwei, relativ zueinander, bewegten Komponenten bevorzugt zumindest ein Fahrzeug, insbesondere Seefahrzeug und/oder Landfahrzeug und/oder Luftahrzeug, und/oder einen Satelliten als mindestens eine Komponente umfassen. Besonders bevorzugt handelt es sich bei den Komponenten um Satelliten, welche sich beispielsweise in einer 600-800 Kilometern über der Erdoberfläche bewegen, beispielsweise mit einer sonnensynchronen Umlaufzeit und beispielsweise einer Umlaufzeit von zwischen 60 und 120, vorzugsweise von etwa 90, Minuten.

In einer bevorzugten Weiterbildung des erfindungsgemäßen Verfahrens wird jeweils einer der Teile mittels je einer der Komponenten übertragen. In dieser Weiterbildung der Erfindung werden folglich jeweils einzelne Teile der verteilten Datenbank mittels einer Komponente übertragen und müssen nicht eigens über mehrere Komponenten aufgeteilt werden. Optional und vorteilhaft können jedoch Teile redundant, d. h. jeweils mehrfach mittels je einer Komponente übertragen werden. Auf diese Weise ist die Übertragung vor Übertragungsfehlern und Manipulationsversuchen zusätzlich geschützt.

Zweckmäßig wird bei dem erfindungsgemäßen Verfahren jeweils einer der Teile mehrfach mittels je einer, nicht notwendig einer identischen, der Komponenten übertragen. In dieser Weiterbildung der Erfindung wird zweckmäßig jedes der Teile mit weiteren Teilen der verteilten Datenbank kryptographisch verknüpft.

Bevorzugt werden bei dem erfindungsgemäßen Verfahren mit den bewegten Komponenten des Netzwerks nicht jeweils, d. h. nicht mit je einer Komponente, sämtliche Teile der verteilten Datenbank übertragen. Vorzugsweise wird bei dem erfindungsgemäßen Verfahren mit je einer Komponente höchstens eine echte Teilmenge oder echte Untermenge der Teile der verteilten Datenbank übertragen. Die echte Teilmenge oder echte Untermenge enthält dabei nicht sämtliche Teile, sondern weniger Teile, etwa zumindest ein Teil weniger oder vorzugsweise höchstens die Hälfte der Teile oder insbesondere weniger als die Hälfte der Teile. Auf diese Weise kann die verteilte Datenbank mittels Teilen in Gestalt sogenannter Shards übertragen werden, wobei das erfindungsgemäße Verfahren infolge der echten Teilmenge, d. h. infolge der Übertragung nicht sämtlicher Teile, der verteilten Datenbank besonders gut skalierbar ist. Eine Vervielfältigung der Übertragungskapazitäten ist infolge des erfindungsgemäßen Verfahrens daher nicht notwendig erforderlich. Vorteilhaft können mittels des erfindungsgemäßen Verfahrens Übertragungsfenster der bewegten Komponenten des Netzwerks, welche für eine Übertragung der gesamten verteilten Datenbank allein nicht ausreichen würden, genutzt werden. Mittels des erfindungsgemäßen Verfahrens wird die vollständige Datenbank vielmehr mittels der mehreren bewegten Komponenten gemeinsam, d. h. zusammengenommen, übertragen. Besonders vorteilhaft wird bei dem erfindungsgemäßen Verfahren mit jeder der bewegten Komponenten höchstens eine echte Teilmenge der Teile der verteilten Datenbank übertragen. In dieser Weiterbildung ist das erfindungsgemäße Verfahren besonders gut skalierbar.Bei dem Verfahren sind gemäß einer vorteilhaften Weiterbildung der Erfindung die Teile derart miteinander kryptographisch verknüpft, dass die Teile in zumindest einer Abfolge aufeinander angeordnet sind, wobei jeder Teil der Abfolge, der auf einen vorhergehenden Teil folgt, mit mindestens einem Hashwert dieses vorhergehenden Teils versehen ist. Grundsätzlich können auch mehrere oder sämtliche Teile redundant übertragen werden, wobei jeder Teil der Abfolge, der auf einem redundant, also mehrfach, vorhandenen Teil folgt, mit mindestens dem Hashwert der jeweils gleichen, mehrfach vorhandenen Teile versehen sein.

Bei dem Verfahren gemäß der Erfindung wird vorzugsweise jeweils eine Signatur der Teile jeweils durch eine Komponente, mittels der sie übertragen werden, angefordert oder entgegengenommen. Die Signatur meint in dieser Weiterbildung eine durch die Komponente vorgenommene Signatur der jeweiligen Teile. Auf diese Weise verifiziert die Komponente den jeweiligen Teil, sodass das erfindungsgemäße Verfahren zusätzlich vor unentdeckter Manipulation oder Datenübertragungsfehlern geschützt ist, da infolge einer ungültigen Signatur Manipulationen oder Datenübertragungsfehler einzelner Teile leicht erkannt werden können. Zweckmäßig wird dabei zusätzlich ein öffentlicher, mit der Signatur korrespondierender, Schlüssel übertragen, sodass die Signatur leicht überprüft werden kann.

In einer vorteilhaften Weiterbildung der Erfindung ist das Verfahren computerimplementiert.

Das erfindungsgemäße Computerprogrammprodukt ist ausgebildet und eingerichtet zum Übertragen von Daten von einem Übertragungsursprung zu einem Übertragungsziel mittels zumindest zwei relativ zu Übertragungsursprung und/oder Übertragungsziel bewegter Komponenten gemäß dem vorbeschriebenen erfindungsgemäßen Verfahren. Das erfindungsgemäße Computerprogrammprodukt ist ausgebildet, die Daten in eine verteilte Datenbank mit mindestens zwei Teilen zu verteilen oder aus einer verteilten Datenbank mit mindestens zwei Teilen zusammenzusetzen, wobei die Teile der verteilten Datenbank miteinander kryptographisch verknüpft sind, und die Teile mittels mindestens zwei der Komponenten zu übertragen, wobei das Computerprogrammprodukt vorzugsweise eingerichtet ist, jeweils eine durch eine Komponente vorgenommene Signatur der Teile, mittels der sie übertragen werden, anzufordern oder entgegenzunehmen.

Der erfindungsgemäße Sender und/oder Empfänger ist ausgebildet zur Ausführung eines erfindungsgemäßen Verfahrens wie vorhergehend beschrieben und/oder weist ein erfindungsgemäßes Computerprogrammprodukt wie vorhergehend beschrieben auf.

Nachfolgend wird die Erfindung anhand in der Zeichnung dargestellter Ausführungsbeispiele näher erläutert. Es zeigen:
- Fig. 1: eine Datenbank zur Ausführung des erfindungsgemäßen Verfahrens zum Übertragen von Daten mittels zumindest zwei bewegter Komponenten schematisch in einer Prinzipskizze sowie
- Fig. 2: einen Sender und einen Empfänger bei der Ausführung des erfindungsgemäßen Verfahrens schematisch in einer Prinzipskizze.

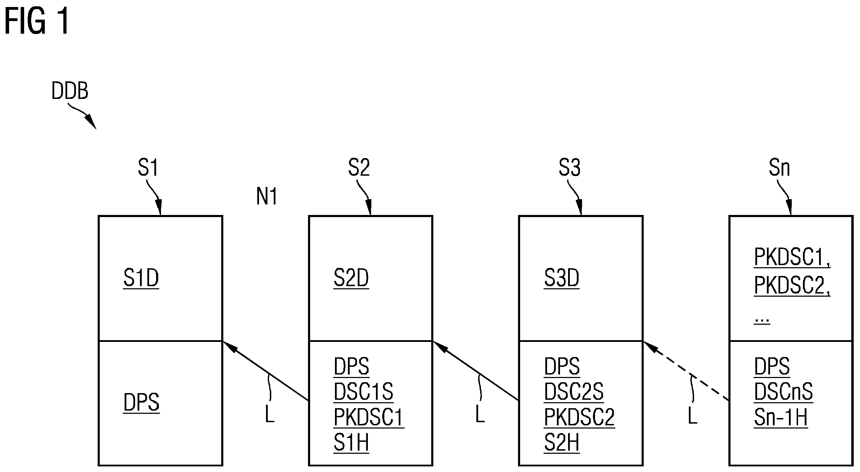

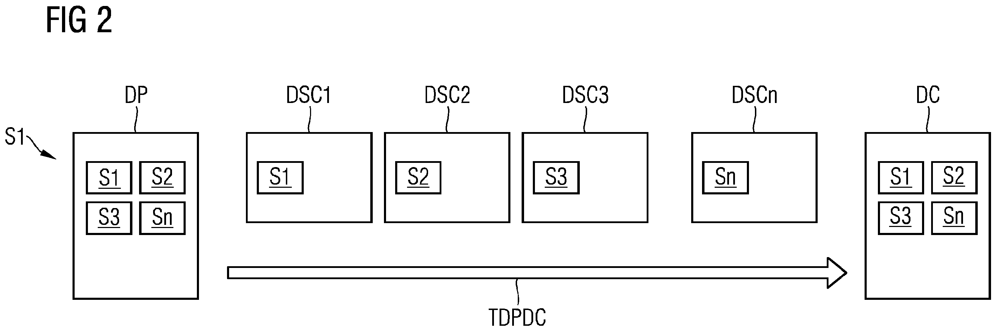

Bei dem anhand der Figuren 1 und 2 dargestellten erfindungsgemäßen Verfahren werden Daten von einem Sender in Gestalt eines Edgegeräts DP zu einem Empfänger in Gestalt eines Servers DC gesendet. Die Daten bilden im dargestellten Ausführungsbeispiel ein Dokument, können aber in weiteren, nicht eigens dargestellten Ausführungsbeispielen auch sonstige Daten, etwa eine Datenbank, bilden.

Die Daten werden mittels eines Satellitennetzwerks von beispielsweise 50 Satelliten DSC1, DSC2, DSC3, DSCn als Komponenten des Netzwerks übertragen. Die Satelliten DSC1, DSC2, DSC3, DSCn umrunden in einem erdnahen Orbit in der Höhe von 700 bis 800 Kilometern Höhe die Erde mit einer Umlaufzeit von 90 Minuten.

Das Edgegerät DP sendet das Dokument wie folgt an den Server DC:
Das Edgegerät DP teilt in einem vorbereitenden Schritt die Daten des Dokuments in eine verteilte Datenbank DDB mit mehreren Teilen S1, S2, S3, Sn welche in an sich bekannter Weise auch als Shards bezeichnet werden. Die Teile S1, S2, S3, Sn sind mittels kryptographischer Verknüpfungen L wie Blöcke einer Blockchain oder Blockkette miteinander kryptographisch verknüpft. Die kryptographischen Verknüpfungen L der Teile S1, S2, S3, Sn der verteilten Datenbank DDB stellen die Integrität des Dokuments sicher.

Die Aufteilung der Daten in die einzelnen Teile der verteilten Datenbank erfolgt mittels eines nicht eigens in der Zeichnung dargestellten Softwaremoduls des Feldgeräts DP. Das Softwaremodul plant die Größe der Teile S1, S2, S3 in Abhängigkeit von den nutzbaren Kommunikationsfenstern der Satelliten DSC1, DSC2, DSC3, DSCn. Solche Kommunikationsfenster werden beispielsweise mittels einer Übertragungsfensterkomponente anhand von Statusdaten der Satelliten DSC1, DSC2, DSC1, DSC2, DSC3, DSCn ermittelt.

Wenn ein geeignetes Kommunikationsfenster eines das Edgegerät DP passierenden ersten Satelliten DSC1 eröffnet ist, so signalisiert der erste Satellit DSC1 seine Verfügbarkeit für das Edgegerät DP mittels eines Verfügbarkeitssignals und sendet ein Angebot von Übermittlungsressourcen, beispielsweise eine Datenübertragungsrate und eine Speicherverfügbarkeit des ersten Satelliten DSC1, an das Edgegerät DP.

Wenn das Angebot der Übermittlungsressourcen mit den Anforderungen des Edgegeräts DP übereinstimmt, so verschlüsselt das Edgegerät DP die Daten S1D eines ersten Teils S1 der verteilten Datenbank DDB und fügt den Daten S1D des ersten Teils S1 danach Verrechnungsdaten des ersten Satelliten DSC1 sowie Empfängerdaten, welche den Server DC als beabsichtigten Empfänger identifizieren, hinzu. Nachfolgend signiert das Edgegerät den so vervollständigten ersten Teil S1 mit einer digitalen Signatur DPS des Edgegeräts DP. In weiteren, nicht eigens dargestellten Ausführungsbeispielen kann je nach Sensibilität der zu übertragenden Daten das Verschlüsseln der Daten S1D des ersten Teils S1 durch das Edgegerät DP auch entfallen.

Nachfolgend sendet das Edgegerät DP den ersten Teil S1 der verteilten Datenbank an den ersten Satelliten DSC1.

Nach dem Abschluss der Übertragung des ersten Teils S1 an den ersten Satelliten DSC1 berechnet der erste Satellit DSC1 einen Hashwert des ersten Teils S1 und signiert den ersten Teil S1 mit einem lokalen privaten Schlüssel des ersten Satelliten DSC1. Nachfolgend übersendet der erste Satellit DSC1 den Hashwert S1H des ersten Teils S1 gemeinsam mit seinem öffentlichen Schlüssel PKDSC1 an das Edgegerät DP. Das Edgegerät DP speichert die Signatur DSC1S und den öffentlichen Schlüssel des ersten Satelliten DSC1 in einem Schlüsselspeicher des Edgegeräts DP und hält den Hashwert S1H des ersten Teils S1 in einem Arbeitsspeicher des Edgegeräts DP.

Das Edgegerät DP verschlüsselt daraufhin die Daten S2D eines zweiten Teils S2 der verteilten Datenbank DDB und hängt ihnen den Hashwert S1H des ersten Teils S1 sowie die Signatur DCS1S des ersten Satelliten DSC1 an. Danach signiert das Edgegerät DP den so vervollständigten zweiten Teil S2 der verteilten Datenbank.

Falls das Kommunikationsfenster des ersten Satelliten DSC1 noch geöffnet ist, übersendet das Edgegerät den zweiten Teil S2 an den ersten Satelliten DSC1. Falls das Kommunikationsfenster des ersten Satelliten DSC1 geschlossen ist, wartet das Edgegerät DP auf ein nachfolgendes Kommunikationsfenster eines zweiten Satelliten DSC2. Letztere Situation zeigt Fig. 1.

Auf diese Weise werden sämtliche Teile der verteilten Datenbank DDB an Satelliten DSC1, DSC2, DSC3, DSCn mit verfügbaren Übermittlungsressourcen übertragen. D. h. der Satellit DSC3 erhält den Teil S3, dem die Signatur DPS des Edgegeräts DP, die Signatur DCS2S des zweiten Satelliten DCS2 sowie den öffentlichen Schlüssel PKDCS2 des zweiten Satelliten DCS2 sowie einen Hashwert des S2H des zweiten Teils S2 der verteilten Datenbank angehängt ist. Wenn sämtliche Teile der verteilten Datenbank, die Daten des zu übertragenden Dokuments enthalten, übertragen sind, wird ein letzter Teil Sn der verteilten Datenbank generiert, indem ein Hashwert Sn-1H desjenigen letzten übertragenen Teils S3, der Daten S3D des zu übertragenden Dokuments enthält, generiert wird und die zwischengespeicherten Signaturen DSCnS der Satelliten DSC1, DSC2,DSC3, DSCn, mittels derer die Teile S1, S2, S3, Sn signiert worden sind, und die öffentlichen Schlüssel PKDSC1, PKDSC2, dieser Satelliten DSC1, DSC2, DSC3, DSCn sowie die Signatur DPS des Edgegeräts DP hinzugefügt werden.

Bei dem erfindungsgemäßen Verfahren können Teile S1, S2, S3, Sn der verteilten Datenbank DDB redundant übertragen werden, wobei ein dem redundant übertragenen Teil nachfolgend übertragener Teil sämtliche Signaturen der bei der Übertragung des redundant übertragenen Teils beteiligten Satelliten DSC1, DSC2, DSC3, DSCn beinhaltet.

Die mittels des erfindungsgemäßen Verfahrens übertragene verteilte Datenbank DDB weist die in Fig. 1 dargestellte Struktur auf und wird mittels des in Fig. 2 dargestellten Übertragungsschritts TDPDC vom Edgegerät DP zum Server DC übertragen.

Die kryptographische Verknüpfung L der Teile S1, S2, S3, Sn der verteilten Datenbank DDB wird bei dem erfindungsgemäßen Verfahren genutzt, um das ursprüngliche Dokument zu rekonstruieren:
Wenn einer der Satelliten DSC2 den Server DC passiert und dem Server DC den dem Satelliten DSC2 übermittelten Teil S2 der verteilten Datenbank DDB noch nicht übermittelt hat, so übersendet der Satellit DSC2 dem Server DC den Teil S2.

Der Server DC sammelt sämtliche Teile S1, S2, S3, Sn der verteilten Datenbank DDB. Sobald der Server DC sämtliche Teile S1, S2, S3, Sn der verteilten Datenbank DDB erhalten hat, beginnt der Server mit der Rekonstruktion der übertragenen Daten mittels einer Ordnung der Teile der verteilten Datenbank anhand der Verknüpfung der Teile S1, S2, S3, Sn mittels der Hashwerte S1H, S2H, Sn-1H. Dazu weist der Server DC ein softwarebasiertes Wiederherstellungsmodul auf. Das Wiederherstellungsmodul verifiziert die Integrität der Teile S1, S2, S3, Sn anhand der öffentlichen Schlüssel PKDSC1, PKDSC2, ... der Satelliten DSC1, DSC2, DSC3, DSCn und der Signaturen DSC1S, DSC2S, DSCnS der Teile S1, S2, S3, Sn.

Nach erfolgreicher Verifizierung der erhaltenen Teile S1, S2, S3, Sn entschlüsselt das Wiederherstellungsmodul des Servers DC die Teile S1, S2, S3, Sn der verteilten Datenbank DDB, rekonstruiert die verteilte Datenbank DDB und rekombiniert die Teile S1, S2, D3, Sn der verteilten Datenbank DDB zum zu übertragenden Dokument. Folglich wurde das Dokument mittels des erfindungsgemäßen Verfahrens vom Edgegerät DP an den Server DC übertragen.

In einem nicht eigens dargestellten Ausführungsbeispiel, welches im Übrigen dem gezeigten Ausführungsbeispiel entspricht, wird mittels jeder der Satelliten DSC1, DSC2, DSC3, DSCn nicht die gesamte verteilte Datenbank DDB übertragen, sondern mittels jedes der Satelliten DSC1, DSC2, DSC3, DSCn wird lediglich höchstens eine echte Teilmenge der Teile S1, S2, D3, Sn der verteilten Datenbank DDB übertragen.

## Patentansprüche

1. Verfahren zum Übertragen (TDPDC) von Daten von einem Übertragungsursprung (DP) zu einem Übertragungsziel (DC) mittels zumindest zwei relativ zu Übertragungsursprung (DP) und/oder Übertragungsziel (DC) bewegter Komponenten (DSC1, DSC2, DSC3, DSCn) eines Netzwerks, **dadurch gekennzeichnet, dass** die Übertragung mittels einer verteilten Datenbank (DDB) derart mit mindestens zwei Teilen (S1, S2, S3, Sn) erfolgt, dass die Übertragung zumindest ein Aufteilen der Daten in die Teile (S1, S2, S3, Sn) der verteilten Datenbank (DDB) und/oder ein Zusammenfügen der Teile (S1, S2, S3, Sn) der verteilten Datenbank (DDB) umfasst, wobei die Teile (S1, S2, S3, Sn) mittels mindestens zwei der Komponenten (DSC1, DSC2, DSC3, DCSn) übertragen werden und wobei die Teile (S1, S2, S3, Sn) der verteilten Datenbank (DDB) miteinander kryptographisch verknüpft sind.

2. Verfahren nach Anspruch 1, bei welchem das Übertragen (TDPDC) zumindest ein Senden und/oder Empfangen umfasst.

3. Verfahren nach einem der vorhergehenden Ansprüche, bei welchem die zumindest zwei, relativ zueinander, bewegten Komponenten (DSC1, DSC2, DSC3, DCSn) zumindest ein Fahrzeug, insbesondere Seefahrzeug und/oder Landfahrzeug und/oder Luftahrzeug, und/oder einen Satelliten als mindestens eine Komponente umfassen.

4. Verfahren nach einem der vorhergehenden Ansprüche, bei welchem jeweils einer der Teile (S1, S2, S3, Sn) mittels je einer der Komponenten (DSC1, DSC2, DSC3, DCSn) übertragen wird.

5. Verfahren nach einem der vorhergehenden Ansprüche, bei welchem jeweils einer der Teile (S1, S2, S3, Sn) mehrfach mittels je einer, nicht notwendig einer identischen, der Komponenten (DSC1, DSC2, DSC3, DCSn) übertragen wird.

6. Verfahren nach einem der vorhergehenden Ansprüche, bei welchem mit den bewegten Komponenten (DSC1, DSC2, DSC3, DCSn) nicht jeweils sämtliche Teile (S1, S2, S3, Sn) der verteilten Datenbank (DDB) übertragen werden, sondern höchstens eine echte Teilmenge der Teile (S1, S2, S3, Sn) der verteilten Datenbank (DDB).

7. Verfahren nach einem der vorhergehenden Ansprüche, bei welchem die Teile (S1, S2, S3, Sn) derart miteinander kryptographisch verknüpft sind, dass die Teile (S1, S2, S3, Sn) in zumindest einer Abfolge aufeinander angeordnet sind, wobei jeder Teil (S2, S3, Sn) der Abfolge, der auf einen vorhergehenden Teil (S1, S2, S3) folgt, mit mindestens einem Hashwert (S1H, S2H, Sn-1H) dieses vorhergehenden Teils (S1, S2, S3) versehen ist.

8. Verfahren nach einem der vorhergehenden Ansprüche, bei welchem jeweils eine Signatur (DSC1S, DSC2S, DSCnS) der Teile (S1, S2, S3, Sn) jeweils durch eine Komponente (DSC1, DSC2, DSC3, DCSn), mittels der sie übertragen werden, angefordert oder entgegengenommen wird.

9. Verfahren nach einem der vorhergehenden Ansprüche, welches computerimplementiert ist.

10. Computerprogrammprodukt, ausgebildet und eingerichtet zum Übertragen (TDPDC) von Daten von einem Übertragungsursprung zu einem Übertragungsziel mittels zumindest zwei relativ zu Übertragungsursprung und/oder Übertragungsziel bewegter Komponenten (DSC1, DSC2, DSC4, DSC4, DCSn) gemäß dem Verfahren nach einem der vorhergehenden Ansprüche, welches ausgebildet ist, die Daten in eine verteilte Datenbank (DDB) mit mindestens zwei Teilen (S1, S2, S3, Sn) zu verteilen oder aus einer verteilten Datenbank (DDB) mit mindestens zwei Teilen zusammenzusetzen, wobei die Teile der verteilten Datenbank miteinander kryptographisch verknüpft sind, und die Teile (S1, S2, S3, Sn) mittels mindestens zwei der Komponenten (DSC1, DSC2, DSC4, DSC4, DCSn) zu übertragen (TDPDC), wobei das Computerprogrammprodukt vorzugsweise eingerichtet ist, jeweils eine Signatur (DSC1S, DSC2S, DSCnS) der Teile (S1, S2, S3, Sn) durch eine Komponente (DSC1, DSC2, DSC4, DSC4, DCSn), mittels der sie übertragen werden, anzufordern oder entgegenzunehmen.

11. Sender und/oder Empfänger, ausgebildet zur Ausführung eines Verfahrens nach einem der Ansprüche 1 bis 9, vorzugsweise aufweisend ein Computerprogrammprodukt nach Anspruch 10.

## Claims

1. Method for transmitting (TDPDC) data from a transmission source (DP) to a transmission target (DC) by way of at least two components (DSC1, DSC2, DSC3, DSCn) of a network that are moving relative to the transmission source (DP) and/or transmission target (DC), **characterized in that** the transmission takes place by way of a distributed database (DDB) having at least two parts (S1, S2, S3, Sn) such that the transmission comprises at least dividing the data into the parts (S1, S2, S3, Sn) of the distributed database (DDB) and/or merging the parts (S1, S2, S3, Sn) of the distributed database (DDB), wherein the parts (S1, S2, S3, Sn) are transmitted by way of at least two of the components (DSC1, DSC2, DSC3, DCSn), and wherein the parts (S1, S2, S3, Sn) of the distributed database (DDB) are linked cryptographically to one another.

2. Method according to Claim 1, in which the transmission (TDPDC) comprises at least sending and/or receiving.

3. Method according to either of the preceding claims, in which the at least two components (DSC1, DSC2, DSC3, DSCn) that are moving relative to one another comprise at least one vehicle, in particular marine vehicle and/or land vehicle and/or aircraft, and/or a satellite as at least one component.

4. Method according to one of the preceding claims, in which in each case one of the parts (S1, S2, S3, Sn) is transmitted by a respective one of the components (DSC1, DSC2, DSC3, DSCn).

5. Method according to one of the preceding claims, in which in each case one of the parts (S1, S2, S3, Sn) is transmitted multiple times by a respective one, and not necessarily identical one, of the components (DSC1, DSC2, DSC3, DSCn).

6. Method according to one of the preceding claims, in which the moving components (DSC1, DSC2, DSC3, DSCn) are not used to transmit in each case all parts (S1, S2, S3, Sn) of the distributed database (DDB), but rather at most an actual partial set of the parts (S1, S2, S3, Sn) of the distributed database (DDB).

7. Method according to one of the preceding claims, in which the parts (S1, S2, S3, Sn) are linked cryptographically to one another such that the parts (S1, S2, S3, Sn) are arranged in at least one sequence in relation to one another, wherein each part (S2, S3, Sn) of the sequence that follows a preceding part (S1, S2, S3) is provided with at least one hash value (S1H, S2H, Sn-1H) of this preceding part (S1, S2, S3).

8. Method according to one of the preceding claims, in which in each case a signature (DSC1S, DSC2S, DSCnS) of the parts (S1, S2, S3, Sn) is requested or received in each case by a component (DSC1, DSC2, DSC3, DSCn) by way of which these parts are transmitted.

9. Method according to one of the preceding claims, which method is computer-implemented.

10. Computer program product, designed and configured to transmit (TDPDC) data from a transmission source to a transmission target by way of at least two components (DSC1, DSC2, DSC4, DSC4, DSCn) that are moving relative to the transmission source and/or transmission target, in accordance with the method according to one of the preceding claims, which computer program product is designed to distribute the data into a distributed database (DDB) having at least two parts (S1, S2, S3, Sn) or to compose said data from a distributed database (DDB) having at least two parts, wherein the parts of the distributed database are linked cryptographically to one another, and to transmit (TDPDC) the parts (S1, S2, S3, Sn) by way of at least two of the components (DSC1, DSC2, DSC4, DSC4, DSCn), wherein the computer program product is preferably configured to request or receive a respective signature (DSC1S, DSC2S, DSCnS) of the parts (S1, S2, S3, Sn) by a component (DSC1, DSC2, DSC4, DSC4, DSCn) by way of which these parts are transmitted.

11. Transmitter and/or receiver, designed to implement a method according to one of Claims 1 to 9, preferably having a computer program product according to Claim 10.

## Revendications

1. Procédé pour la transmission (TDPDC) de données d'une source de transmission (DP) à une cible de transmission (DC) au moyen d'au moins deux composants (DSC1, DSC2, DSC3, DSCn) d'un réseau, mobiles par rapport à la source de transmission (DP) et/ou à la cible de transmission (DC), **caractérisé en ce que** la transmission s'effectue au moyen d'une base de données distribuée (DDB) avec au moins deux parties (S1, S2, S3, Sn) de telle sorte que la transmission comporte au moins une fraction des données dans les parties (S1, S2, S3, Sn) de la base de données distribuée (DDB) et/ou une fusion des parties (S1, S2, S3, Sn) de la base de données distribuée (DDB), dans lequel les parties (S1, S2, S3, Sn) sont transmises au moyen d'au moins deux des composants (DSC1, DSC2, DSC3, DCSn) et dans lequel les parties (S1, S2, S3, Sn) de la base de données distribuée (DDB) sont liées cryptographiquement les unes aux autres.

2. Procédé selon la revendication 1, dans lequel la transmission (TDPDC) comporte au moins une émission et/ou une réception.

3. Procédé selon l'une des revendications précédentes, dans lequel les au moins deux composants (DSC1, DSC2, DSC3, DCSn) mobiles, les uns par rapport aux autres, comportent en tant qu'au moins un composant au moins un véhicule, en particulier un véhicule maritime et/ou un véhicule terrestre et/ou un aéronef, et/ou un satellite.

4. Procédé selon l'une des revendications précédentes, dans lequel respectivement l'une des parties (S1, S2, S3, Sn) est transmise au moyen respectivement de l'un des composants (DSC1, DSC2, DSC3, DCSn).

5. Procédé selon l'une des revendications précédentes, dans lequel respectivement l'une des parties (S1, S2, S3, Sn) est transmise plusieurs fois au moyen respectivement de l'un des composants (DSC1, DSC2, DSC3, DCSn), non nécessairement identique.

6. Procédé selon l'une des revendications précédentes, dans lequel, avec les composants (DSC1, DSC2, DSC3, DCSn) mobiles, respectivement toutes les parties (S1, S2, S3, Sn) de la base de données distribuée (DDB) ne sont pas transmises, mais tout au plus un sous-ensemble réel des parties (S1, S2, S3, Sn) de la base de données distribuée (DDB).

7. Procédé selon l'une des revendications précédentes, dans lequel les parties (S1, S2, S3, Sn) sont liées cryptographiquement les unes aux autres de telle sorte que les parties (S1, S2, S3, Sn) soient disposées les unes par rapport aux autres en au moins une séquence, dans lequel chaque partie (S2, S3, Sn) de la séquence qui suit une partie précédente (S1, S2, S3) est pourvue d'au moins une valeur de hachage (S1H, S2H, Sn-1H) de cette partie précédente (S1, S2, S3).

8. Procédé selon l'une des revendications précédentes, dans lequel respectivement une signature (DSC1S, DSC2S, DSCnS) des parties (S1, S2, S3, Sn) est requise ou reçue respectivement par le biais d'un composant (DSC1, DSC2, DSC3, DCSn) au moyen duquel elles sont transmises.

9. Procédé selon l'une des revendications précédentes, lequel est mis en œuvre par ordinateur.

10. Produit de programme informatique, conçu et constitué pour la transmission (TDPDC) de données d'une source de transmission à une cible de transmission au moyen d'au moins deux composants (DSC1, DSC2, DSC4, DSC4, DCSn) mobiles par rapport à la source de transmission et/ou à la cible de transmission selon le procédé selon l'une des revendications précédentes, lequel est conçu pour distribuer les données dans une base de données distribuée (DDB) avec au moins deux parties (S1, S2, S3, Sn) ou pour les assembler à partir d'une base de données distribuée (DDB) à au moins deux parties, dans lequel les parties de la base de données distribuée sont liées cryptographiquement les unes aux autres, et pour transmettre (TDPDC) les parties (S1, S2, S3, Sn) au moyen d'au moins deux des composants (DSC1, DSC2, DSC4, DSC4, DCSn), le produit de programme informatique étant de préférence constitué pour requérir ou recevoir respectivement une signature (DSC1S, DSC2S, DSCnS) des parties (S1, S2, S3, Sn) par le biais d'un composant (DSC1, DSC2, DSC4, DSC4, DCSn) au moyen duquel elles sont transmises.

11. Émetteur et/ou récepteur, conçu pour l'exécution d'un procédé selon l'une des revendications 1 à 9, comprenant de préférence un produit de programme informatique selon la revendication 10.
